# EUROPEAN PATENT APPLICATION

(11) **EP 1 635 364 A1**
(43) Date of publication of application: **15.03.2006**
(21) Application number: 04405562.2
(22) Date of filing: 09.09.2004
(51) Int. Cl.: H01F 27/32, H01F 41/12, C08G 18/58, H01B 3/30

(54) **Dry-type encapsulated transformer coils**

(71) Applicant: ABB RESEARCH LTD., 8050 Zürich (CH)
(72) Inventor: Schaal, Stéphane, 67640 Lipsheim (FR); Ghoul, Cherif, 68200 Mulhouse (FR); Rocks, Jens, 8057 Zürich (CH); Johnson, Charles W., Wytheville, Virginia 24382 (US)
(74) Representative: ABB Patent Attorneys

(57) **Abstract**

Dry-type distribution transformer, wherein the transformer coils are encapsulated with a cured mineral filler containing epoxy modified isocyanate resin composition; method of making said insulating/encapsulating composition and the non-cured insulting composition.

## Description

### Field of the Invention

The present invention relates to dry-type transformers, especially to dry-type distribution transformers, wherein the transformer coils are encapsulated with a mineral filler containing epoxy modified isocyanate resin composition.

### State of the Art

Dry-type transformers are known and described e.g. in EP 0 923 785 or WO 03/107364. The dry-type transformers of the present invention contain windings that can be used as dry-type transformer high- and low-voltage windings. Dry-type transformers are used for distributing electrical energy, preferably within the range of 5 kVA to 2500 kVA. Dry-type transformers or dry-type distribution transformers comprise coils resp. windings that are generally embedded into a thermosetting insulating material. Most commonly, the insulating material is a filled epoxy resin and the windings are manufactured by vacuum casting.

Epoxy resins present a number of advantages over other thermosetting polymers. They have generally a low price, are easy to process and have good dielectrical and mechanical properties. However, epoxy resins have generally limited temperature stability. Today's market requires that transformers have an increased overload capacity and an extended lifetime. It is further required that the transformers are operated at elevated temperatures and therefore, the insulation material must exhibit an improved temperature resistance. This problem is described for example in G. Pritchard, Developments in Reinforced Plastics, vol. 5, Applied Science (1986), where it is shown that epoxy resins are not suitable for application at elevated temperatures, especially from a thermal point of view. Other technologies were developed, but these have other disadvantages compared to traditional coils encapsulated with an epoxy resin wherein the windings are manufactured by vacuum casting, especially with regard to processing and material costs. Consequently, there is a need for improved materials which are useful for encapsulating transformer coils, resp. transformer windings, which have an improved temperature stability compared to epoxy resins and further are compatible with a conventional vacuum casting manufacturing technique. Epoxy modified isocyanate resin compositions are known. However, the use of these compounds as insulation system for transformer coils in dry-type transformers has not been described.

### Description of the Invention

The present invention is defined in the claims. The present invention relates to dry-type transformers, especially to dry-type distribution transformers, characterized in that the transformer coils are encapsulated with a cured mineral filler containing epoxy modified isocyanate resin composition.

Said mineral filler containing cured epoxy modified isocyanate resin composition, resp. insulating composition, resp. encapsulating composition, is obtained by curing a composition comprising the components (i), (ii) and (iii), wherein component (i) is a isocyanate resin, which is present within the range of 1%-60% by weight, preferably within the range of 15%-35% by weight, calculated to the total weight of the insulating composition; component (ii) is an epoxy resin, which is present within the range of 1%-50% by weight, preferably within the range of 20%-40% by weight, calculated to the total weight of the insulating composition; and component (iii) is a mineral filler material which is present within the range of 20%-80% by weight, preferably within the range of 40%-70% by weight, and preferably within the range of 50%-65% by weight, calculated to the total weight of the insulating composition.

The present invention also relates to the non-cured composition containing the components (i), (ii) and (iii), and to the prepolymer made of the components (i), (ii) and (iii), as starting compositions for encapsulating transformer coils within a dry-type transformers, especially within a dry-type distribution transformer. The composition optionally contains further additives as further on.

Isocyanate resin components as used in the present invention are known and can be used within the frame of the present invention. The isocyanate resin component within the insulating composition is preferably based on the following compounds either as single compounds or as a mixture of these compounds, of formula (I) or formula (II): 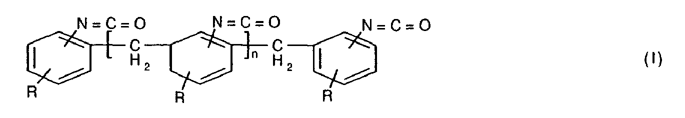
R = H or C1-C4-Alkyl, preferably hydrogen
n = 1 to 5 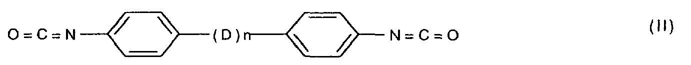
D = -O-, -SO2-, -CH2-, -C(H)CH3-, -C(CH3)2-, -C(CF3)2-
n = zero or 1
or formula (III):

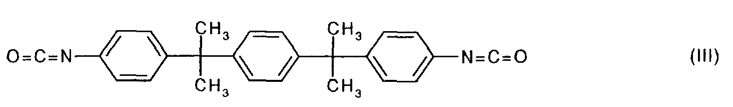

Preferred are compounds of formula (I) wherein R is hydrogen or compounds of formula (II) wherein D = -CH₂-, -C(H)CH₃- or ―C(CH₃)₂-, or a mixture of these compounds, preferably e.g. diphenylmethane diisocyanate (MDI).

Preferred epoxy resins used within the context of the present invention are aromatic and/or cycloaliphatic compounds. These compounds are known per se. Epoxy resins are reactive glycidyl compounds containing at least two 1,2-epoxy groups per molecule. Preferably a mixture of polyglycidyl compounds is used such as a mixture of diglycidyl- and triglycidyl compounds. It is possible to combine one or more of these glycidyl compounds with a isocyanate resin component as defined above and obtain a resin composition useful as an encapsulation material as defined in the present invention. The combination of the two components is a problem of optimization only.

Epoxy resin compounds useful for the present invention comprise unsubstituted glycidyl groups and/or glycidyl groups substituted with methyl groups. These glycidyl compounds preferably have a molecular weight between 200 and 1200, especially between 200 and 1000 and may be solid or liquid. The epoxy value (equiv./100 g) is preferably at least three, preferably at least four and especially at about five, preferably about 4.9 to 5.1. Preferred are glycidyl compounds which have glycidyl ether- and/or glycidyl ester groups. Such a compound may also contain both kinds of glycidyl groups, e.g. 4-glycidyloxy-benzoic acid glycidyl ester. Preferred are polyglycidyl esters with 1-4 glycidyl ester groups, especially diglycidyl ester and/or triglycidyl esters. Preferred glycidyl esters may be derived from aromatic, araliphatic, cycloaliphatic, heterocyclic, heterocyclic-aliphatic or heterocyclic-aromatic dicarbonic acids with 6 to 20, preferably 6 to 12 ring carbon atoms or from aliphatic dicarbonic acids with 2 to 10 carbon atoms. Preferred are for example optionally substituted epoxy resins of formula (IV): 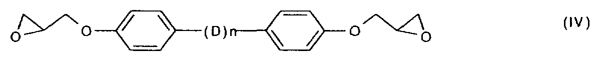
D = -O-, -SO₂-, -CO-, -CH2-, -C(H)CH3-, -C(CH3)2-, -C(CF3)2-
n = zero or 1
or formula (V):

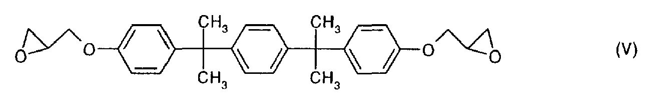

Examples are glycidyl ethers derived from Bisphenol A or Bisphenol F as well as glycidyl ethers derived from Phenol-Novolak-resins or cresol-Novolak-resins.

Cycloaliphatic epoxy resins are for example hexahydro-o-phthalic acid-bis-glycidyl ester, hexahydro-m-phthalic acid-bis-glycidyl ester or hexahydro-p-phthalic acid-bis-glycidyl ester. Also aliphatic epoxy resins, for example 1,4-butane-diol diglycidyl - ether, may be used as a component for the composition of the present invention.

Preferred within the present invention are also aromatic and/or cycloaliphatic epoxy resins which contain at least one, preferably at least two, aminoglycidyl group in the molecule. Such epoxy resins are known and for example described in WO 99/67315. Preferred compounds are those of formula (VI): 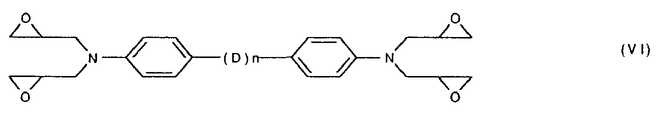
D = -O-, -SO2-, -GO-, -CH2-,-C(CH3)2-,-C(CF3)2-
n = Zero or 1

Especially suitable aminoglycidyl compound are N,N-diglycidylaniline, N,N-diglycidyltoluidine, N,N,N',N'-tetraglycidyl-1,3-diaminobenzene, N,N,N',N'-tetraglycidyl-1,4-diaminobenzene, N,N,N',N'-tetraglycidylxylylendiamine, N,N,N',N'-tetraglycidyl-4,4'-diaminodiphenylmethane, N,N,N',N'-tetraglycidyl-3,3'diethyl-4,4'-diaminodiphenylmethane, N,N,N',N'-tetraglycidyl-3,3'-diaminodiphenylsulfone, N,N'-Dimethyl-N,N'-diglycidyl-4,4'-diaminodiphenylmethane, N,N,N',N'-tetraglycidyl-alfa,alfa'-bis(4-aminophenyl)-p-diisopropylbenzene and N,N,N',N'-tetraglycidyl-alfa,alfa'-bis-(3,5-dimethyl-4-aminophenyl)-p-diisopropylbenzene.

Preferred aminoglycidyl compounds are also those of formula (VII) : 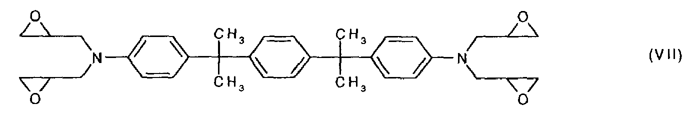
or of formula (VIII):

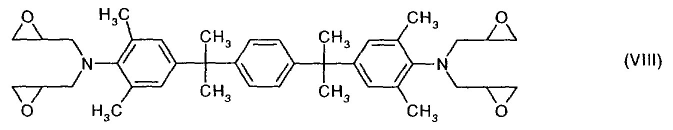

Further aminoglycidyl compounds which can be used according to the present invention are described in e.g. Houben-Weyl, Methoden der Organischen Chemie, Band E20, Makromolekulare Stoffe, Georg Thieme Verlag Stuttgart, 1987, pages 1926-1928.

Mineral filler materials for electrical applications are known. Such materials are for example glass powder, metal oxides such as silicon oxide (Aerosil, quarz, fine quarz powder), magnesium- and aluminium hydroxide [Mg(OH)₂, Al(OH)₃, AlO(OH)], titanium oxide; metal nitrides, such as silicon nitride, boron nitride and aluminium nitride; metal carbides, such as silicon carbide (SiC); metal carbonates (dolomite, CaCO₃), metal sulfates (e.g. baryte), ground natural and synthetic minerals mainly silicates, such as talcum, glimmer, kaolin, wollastonite, bentonite; calciumsilicates such as xonolit [Ca₂Si₆O₁₇(OH)₂]; aluminium-silicates such as andalusite [Al₂O₃.SiO₂] or zeolithe; calcium/magnesium carbonates such as dolomite [CaMg(CO₃)₂]; and known calcium/magnesium silicate, in different powder sizes. Preferred are silicon oxide and/or aluminium oxide, xonolite, magnesium- and aluminium hydroxide, ground natural stones, ground natural and synthetic minerals derived from silicates. The filler material has preferably an average granular size within the range of 1 µm to 300 µm, preferably within the range of 5 µm to 100 µm.

The filler material may optionally be coated for example with a silane or a siloxane known for coating filler materials, e.g. dimethylsiloxanes which may be cross linked, or other known coating materials. These compounds are incorporated herein by reference.

The silane, e.g. a trialkylsilane or a phenyldimethylsilane, or the polysiloxanes used for coating the filler material may contain reactive groups such as hydroxyl, hydrosilyl groups (=Si-H), carboxyl groups, (C₁-C₄)alkyl-epoxy, vinyl (=Si-CH=CH₂) or Allyl (≡Si-CH₂CH=CH₂), and preferably have a viscosity within the range of about 0.97 mPa·s (1 cSt) to about 19'500 mPa·s (measured according to DIN 53 019 at 25°C, calculated with a density of 0.97) and may be linear, two-dimensional or three-dimensional compounds resp. compositions, a mixture of oligomeric compounds or a mixture of the named compounds.

The viscosity of these organopolysiloxanes is preferably within the range of about 0.97 mPa·s (1 cSt) to about 4900 mPa·s, preferably within the range of 2 mPa·s to 2900 mPa·s, preferably within the range of 5 to 700 mPa·s, according to DIN 53 019 at 25°C. Preferably the polysiloxanes have an average molecular weight within the range of about 300 to 100'000, preferably about 300 to 50'000, preferably 400 to 10'000 Dalton.

The filler material optionally may be present in a "porous" form. As a "porous" filler material, which optionally may be coated, is understood, that the density of said filler material is within the range of 60% to 80%, compared to the "real" density of the non-porous filler material. Such porous filler materials have a much higher total surface than the non-porous material. Said surface preferably is higher than 20 m²/g (BET m²/g) and preferably higher than 30 m²/g (BET) and preferably is within the range of 30m²/g (BET) to 100 m²/g (BET), preferably within the range of 40 m²/g (BET) to 60 m²/g (BET) .

Said porous filler material may be coated with a siloxane, preferably with an organopolysiloxane which may be cross linked, with up to 50%-80% by weight, preferably from 60%-70% by weight, calculated to the total weight of the coated filler material.

The insulating composition encapsulating the transformer coils may contain further additives such as hardeners, curing agents, plasticizers, antioxidants, light absorbers, as well as further additives used in electrical applications.

Hardeners are known to be used in epoxy resins. In the present composition such hardeners are optional. Hardeners are for example hydroxyl and/or carboxyl containing polymers such as carboxyl terminated polyester and/or carboxyl containing acrylate- and/or methacrylate polymers and/or carboxylic acid anhydrides. Useful hardeners are further cyclic anhydrides of aromatic, aliphatic, cycloaliphatic and heterocyclic polycarbonic acids. Preferred anhydrides of aromatic polycarbonic acids are phthalic acid anhydride and substituted derivates thereof, benzene-1,2,4,5-tetracarbonic acid dianhydride and substituted derivates thereof. Numerous further hardeners are from the literature.

The optional hardener can be used in concentrations within the range of 0.2 to 1.2, equivalents of hardening groups present, e.g. one anhydride group per 1 epoxide equivalent. However, within the present invention a concentration within the range of 0.2 to 0.4, equivalents of hardening groups is preferred.

Curing agents are for example tertiary amines, such as benzyldimethylamine or amine-complexes such as complexes of tertiary amines with boron trichloride or boron trifluoride; urea derivatives, such as N-4-chlorophenyl-N',N'-dimethylurea (Monuron); optionally substituted imidazoles such as imidazole or 2-phenyl-imidazole. Preferred are tertiary amines. Other curing catalyst such as transition metal complexes of cobalt(III), copper, manganese(II), zinc in acetylacetonate may also be used, e.g. cobalt acetylacetonate(III). The amount of catalyst used is a concentration of about 50ppm-1000ppm by weight, calculated to the composition to be cured.

The composition used according to the present invention has preferably an isocyanate content (-N=C=O) within the range of 10%-30% by weight, preferably within 18%-28% by weight. It further may have a viscosity within the range of 50-30000 mPa·s at 23°C, depending on the components used. It preferably has viscosity within the range of 500 mPa•s - 5000 mPa•s at 23°C.

The insulating composition is made simply by mixing all the components, optionally under vacuum, in any desired sequence and curing the mixture by heating. Preferably the hardener and the curing agent are separately added before curing. The curing temperature is preferably within the range of 50°C to 280°C, preferably within the range of 100°C to 200°C. Curing generally is possible also at lower temperatures, whereby at lower temperatures complete curing may last up to several days depending on the catalyst present and its concentration.

For encapsulating the transformer coil with the insulating composition according to the present invention, the transformer coil is placed into a mold and the insulation composition is added. It is then possible to heat the composition, e.g. by applying an electrical current to the coil to resistively heat the composition to a desired temperature and for a time long enough, optionally under the application of vacuum, to remove all air and moisture from the coil and the insulating composition. The encapsulating composition may be cured by any method known in the art by heating the composition to the desired curing temperature. The following example illustrates the invention.

### Example 1

The coils, resp. windings, of a dry-type distribution transformer are encapsulated with a thermosetting insulating material made of an epoxy modified isocyanate system. The electrical, mechanical and processing properties are compared with the same coils, resp. windings encapsulated with a conventional epoxy resin. As shown, the coils of the dry-type distribution transformer encapsulated with an epoxy modified isocyanate system show much better properties. The recipes used are given in Table 1.

**Table 1**

| COMPONENTS | REFERENCE | EXAMPLE 1 |
|---|---|---|
| epoxy resin 1) | 100 | - |
| hardener 2) | 82 | - |
| accelerator 3) | 2 | - |
| epoxy modified isocyanate 4) | - | 100 |
| filler (silica flour) 5) | 322 | 175 |

| | | |
|---|---|---|
| 1) VE4518 Comp. A, supplied by Bakelite AG | | |
| 2) VE4518 Comp. B, supplied by Bakelite AG | | |
| 3) VE4518 Comp. C, supplied by Bakelite AG | | |
| 4) EW 90IK01 supplied by Hexcel Composites[based on diphenylmethane-diisocyanate (MDI)] | | |
| 5) Millisil W12 supplied by Quarzwerke | | |
| All the formulations shown in Table 1 contain 63.6% by weight of filler. | | |

Short term dynamic degradation was performed by heating the materials at 10°C/min from ambient temperature to 800°C by using a thermogravimetric analyzer (TGA). The onset of degradation was measured and reported in Table 2 below. The data show that the onset of thermal degradation is higher for the composition of Example 1 than for that of the Reference Example. This indicates a higher thermal stability of the formulations according to the invention.

It is generally accepted by those familiar with vacuum casting processes that a material with a dynamic viscosity value of 10 Pa•s or below is suitable for the mentioned process. Steady state dynamic viscosity data show that all of the materials are suitable for a casting process.

Long term thermo-oxidative ageing characteristics were also evaluated. Accelerated ageing was performed at 260°C and flexural strength (ISO 178) was measured before and after 100 hours and 200 hours of ageing. The fraction of the remaining flexural strength after ageing was calculated. The higher the fraction, the better the resistance to thermal ageing. Table 2 below shows that the formulation of Example 1 exhibits a significantly improved resistance to thermal ageing compared to the formulation of the Reference Example.

**Table 2**

| PROPERTIES | REFERENCE | EXAMPLE 1 |
|---|---|---|
| Onset of thermal degradation (°C) | 360 | 390 |
| Steady state dynamic viscosity at 75°C (Pa.s) | 1.0 | 2.2 |
| % of initial flexural strength after 100h at 260°C | 66 | 118 |
| % of initial flexural strength after 200h at 260°C | 12 | 120 |

## Claims

1. Dry-type transformer, especially dry-type distribution transformer, **characterized in that** the transformer coils are encapsulated with a cured mineral filler containing epoxy modified isocyanate resin composition.

2. Dry-type transformer according to claim 1, wherein said mineral filler containing cured epoxy modified isocyanate resin composition is obtained by curing a composition comprising the components (i), (ii) and (iii), wherein component (i) is a isocyanate resin, which is present within the range of 1%-60% by weight, preferably within the range of 15%-35% by weight, calculated to the total weight of the insulating composition; component (ii) is an epoxy resin, which is present within the range of 1%-50% by weight, preferably within the range of 20%-40% by weight, calculated to the total weight of the insulating composition; and component (iii) is a mineral filler material which is present within the range of 20%-80% by weight, preferably within the range of 40%-70% by weight, and preferably within the range of 50%-65% by weight, calculated to the total weight of the insulating composition.

3. Dry-type transformer according to claim 1 or 2, wherein said isocyanate resin component within the insulating composition is based on the following compounds either as single compounds or as a mixture of these compounds, of formula (I) or formula (II): 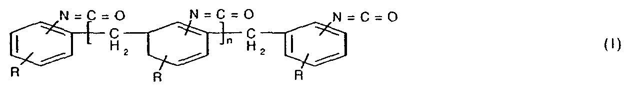
R = H or C 1-C 4-Alkyl, preferably hydrogen
n = 1 to 5 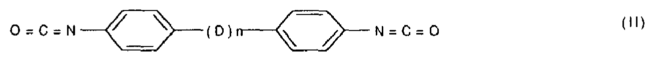
D = -O-, -SO₂-, -CH2-,-C(H)CH3-, -C(CH3)2-, -C(CF3)2-
n = zero or 1
or formula (III):

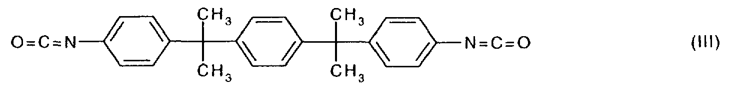

4. Dry-type transformer according to claim 3, wherein said isocyanate resin component is a compound of formula (I) wherein R is hydrogen or a compound of formula (II) wherein D = -CH₂-, - C(H)CH₃- or -C(CH₃)₂-, or a mixture of these compounds, preferably e.g. diphenylmethane diisocyanate.

5. Dry-type transformer according to any one of the claims 1-4, wherein said epoxy resin is an aromatic and/or cycloaliphatic compound containing at least two 1,2-epoxy groups per molecule, preferably a mixture of polyglycidyl compounds, preferably a mixture of diglycidyl- and triglycidyl compounds.

6. Dry-type transformer according to any one of the claims 1-5, wherein said epoxy resins comprise unsubstituted glycidyl groups and/or glycidyl groups substituted with methyl groups, preferably having a molecular weight between 200 and 1200, especially between 200 und 1000.

7. Dry-type transformer according to any one of the claims 1-6, wherein the epoxy content of said epoxy resins is at least three equivalents per kilogram of the compound, preferably at least four equivalents per kilogram and especially at least five equivalents per kilogram.

8. Dry-type transformer according to any one of the claims 1-6, wherein the epoxy compound is a compound of formula (IV): 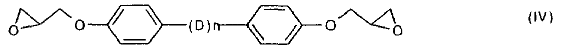
D = -O-, -SO2-, -CO-, -CH2-, -C(H)CH3-, -C(CH3)2-, -C(CF3)2-
n = zero or 1
or formula (V):

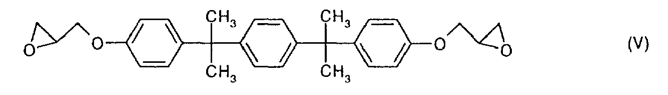

9. Dry-type transformer according to any one of the claims 1-6, wherein the epoxy resin is an aromatic and/or cycloaliphatic epoxy resins which contains at least one, preferably at least two, aminoglycidyl group in the molecule and preferably is a compound of formula (VI): 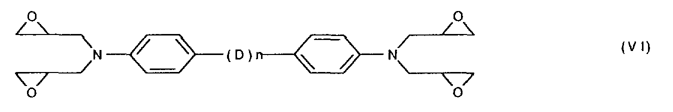
D = -O-, -SO2-, -CO-, -CH2-, -C(CH3)2-, -C(CF3)2-
n = Zero or 1
or formula (VII): 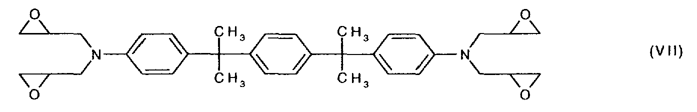
or of formula (VIII):

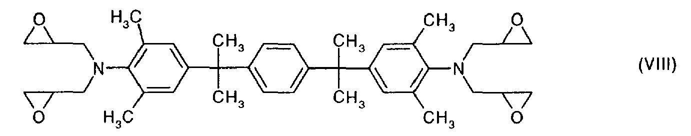

10. Dry-type transformer according to any one of the claims 1-9, wherein the mineral filler is selected from the group comprising glass powder, metal oxides, preferably silicon oxide (Aerosil, quarz, fine quarz powder), magnesium- and aluminium hydroxide [Mg(OH)₂, Al(OH)₃, A10(OH)], titanium oxide; metal nitrides, preferably silicon nitride, boron nitride and aluminium nitride; metal carbides, preferably silicon carbide (SiC); metal carbonates (dolomite, CaC0₃), metal sulfates (e.g. baryte), ground natural and synthetic minerals mainly silicates, preferably talcum, glimmer, kaolin, wollastonite, bentonite; calciumsilicates preferably xonolit [Ca₂Si₆O₁₇(OH)₂]; aluminium-silicates preferably andalusite [Al₂O₃.SiO₂] or zeolithe; calcium/magnesium carbonates preferably dolomite [CaMg(CO₃)₂]; and known calcium/magnesium silicate, in different powder sizes.

11. Dry-type transformer according to claim 10, wherein the filler material is selected from the group comprising silicon oxide, aluminium oxide, xonolite, magnesium hydroxide, aluminium hydroxide, ground natural stones, ground natural and synthetic minerals derived from silicates.

12. Dry-type transformer according to any one of the claims 1-11, wherein the filler material has an average granular size within the range of 1 µm to 300 µm, preferably within the range of 5 µm to 100 µm.

13. Dry-type transformer according to any one of the claims 1-12, wherein the filler material is coated with a silane or a dimethylsiloxane which optionally is cross linked and/or optionally contains reactive groups, preferably selected from the group comprising hydroxyl, hydrosilyl groups (=Si-H), carboxyl groups, (C₁-C₄) alkyl-epoxy, vinyl (=Si-CH=CH₂) or Allyl (≡Si-CH₂CH=CH₂) .

14. Dry-type transformer, according to claim 12, wherein the dimethylsiloxane has a viscosity within the range of about 0. 97 mPa·s (1 cSt) to about 19'500 mPa·s (measured according to DIN 53 019 at 25°C, calculated with a density of 0.97), preferably within the range of about 0.97 mPa·s (1 cSt) to about 4900 mPa·s, preferably within the range of 2 mPa·s to 2900 mPa·s, preferably within the range of 5 to 700 mPa·s, according to DIN 53 019 at 25°C and preferably have an average molecular weight within the range of about 300 to 100'000, preferably 300 to 50'000, preferably 400 to 10'000 Dalton.

15. Dry-type transformer according to any one of the claims 1-14, wherein the filler material is a porous filler material having a density of within the range of 60% to 80% compared to the real density of the non-porous filler material and a total surface higher than 20 m²/g (BET m²/g), preferably higher than 30 m²/g (BET), preferably within the range of 30m²/g (BET) to 100 m²/g (BET), preferably within the range of 40 m²/g (BET) to 60 m²/g (BET).

16. Dry-type transformer according to any one of the claims 1-15, wherein the cured mineral filler containing epoxy modified isocyanate resin composition contains at least one hardener selected from the group comprising hydroxyl and/or carboxyl containing polymers, preferably a carboxyl terminated polyester and/or carboxyl containing acrylate- and/or methacrylate - polymers and/or carboxylic acid anhydrides.

17. Dry-type transformer according to any one of the claims 1-16, wherein the insulating composition encapsulating the transformer coils contains further additives selected from the group comprising hardeners, curing agents, plasticizers, antioxidants, light absorbers, as well as further additives used in electrical applications.

18. Method of making the insulating/encapsulating composition according to any one of the claims 1-17, by mixing all the components, optionally under vacuum, in any desired sequence and curing the mixture by heating, preferably by adding the hardener and the curing agent separately before curing and curing at a temperature preferably within the range of 50°C to 280°C, preferably within the range of 100°C to 200°C or optionally curing at lower temperatures, optionally up to several days depending on the catalyst present and its concentration.

19. The non-cured composition according to any one of the claims 1-17, containing the components (i), (ii) and (iii), optionally in the form of a prepolymer made of the components (i), (ii) and (iii), optionally containing further additives, as starting compositions for encapsulating transformer coils within a dry-type transformers, especially within a dry-type distribution transformer as further on.

20. The composition according to claim 19, wherein the isocyanate content (-N=C=O) is within the range of 10%-30% by weight, preferably within 18%-28% by weight of the composition.

21. The composition according to claim 19 or 20, wherein the viscosity is within the range of 50 mPa•s - 30000 mPa•s at 23 °C, preferably within the range of 500 mPa•s - 5000 mPa•s at 23°C.
